# EUROPEAN PATENT APPLICATION

(11) **EP 3 340 721 A1**
(43) Date of publication of application: **27.06.2018**
(21) Application number: 17208130.9
(22) Date of filing: 18.12.2017
(51) Int. Cl.: H04W 72/12, H04W 72/04, H04L 1/18, H04L 5/00, H04B 1/7143, H04W 74/00

(54) **NB-IOT SCHEDULING SCHEME FOR TRANSMISSIONS TO OR FROM USER EQUIPMENT**

(30) Priority: 22.12.2016 EP 16206077
(71) Applicant: Commsolid GmbH, 01099 Dresden (DE)
(72) Inventor: Kurth, Mathias, 01099 Dresden (DE); Fließ, Thomas, 01097 Dresden (DE)
(74) Representative: Lippert Stachow Patentanwälte Rechtsanwälte

(57) **Abstract**

The invention discloses a narrowband-internet of things (NB-IoT) scheduling scheme for transmissions to or from a user equipment. The object of the invention to provide or introduce a different scheme or procedure for transmission to or from UE where e.g. no additional power consumption is needed in the UE will be solved by a Narrowband-Internet of Things (NB-IoT) scheduling scheme for transmissions to or from user equipment (UE) using multiple NB-IoT carriers allocated in a frequency spectrum of a cell of a network by changing the carriers through frequency hopping according to patterns known to the base station (NB) and UE, whereas the UE is configured with the multiple NB-IoT carriers and the transmissions are scheduled on the configured carriers according to the pattern explicitly signaled by the base station of the network or as pre-defined in both, the base station and the UE to exploit frequency diversity.

## Description

The invention discloses a narrowband-internet of things (NB-IoT) scheduling scheme for transmissions to or from a user equipment.

Various telecommunication standards deploy a time-frequency grid to available radio resources to schedule multiple users. Radio resources in mobile communication networks allow user of wireless devices to communicate with each other regardless of the location. Radio resources are used to transmit and receive within the network.

Propagation channels in mobile communications usually possess a frequency-selective, time-variant nature. This means that certain parts of the spectrum suffer from higher signal attenuation or interference more than others - and this may change over time.

In these systems, frequency hopping is a well-known technique to exploit the diversity of frequency-selective channels to increase the robustness of the communication. Frequency hopping means that different parts of one transmission interval or repetitions of the same are transmitted over different resources in the time-frequency grid, and they are combined at the receiving end of the communication link.

The transmission time interval (TTI) is a parameter in a digital telecommunication network related to encapsulation of data from higher layers into frames for transmission in the radio link layer. TTI refers to the duration of a scheduled unit of transmissions on the radio link layer. Data blocks passed from higher network layers to radio link layer are mapped to single or multiple TTI.

The available frequency spectrum is split into so-called carriers that possess a certain bandwidth, out of a set of supported bandwidths. Furthermore, each carrier may be split into various resources. For example, a 20 MHz LTE carrier is split into 100 resource blocks (RBs). One or multiple RB out of the available ones can be scheduled by base station (NB) to one user equipment (UE), for the duration of one or multiple TTI.

In a system where the available time-frequency resources are split into RBs and TTIs, frequency hopping may be performed by assigning different RBs to the UE in each TTI. For instance, LTE according to the 3GPP standard deploys various frequency hopping schemes for uplink (UL) transmissions, where a base station explicitly signals time variant RBs to be used or the application of a pre-defined pattern for each transmission. This pattern is created by a pseudo-random sequence generator whose parametrization and initialization is known to both, base station and user equipment.

This kind of frequency hopping is limited to a certain component carrier.

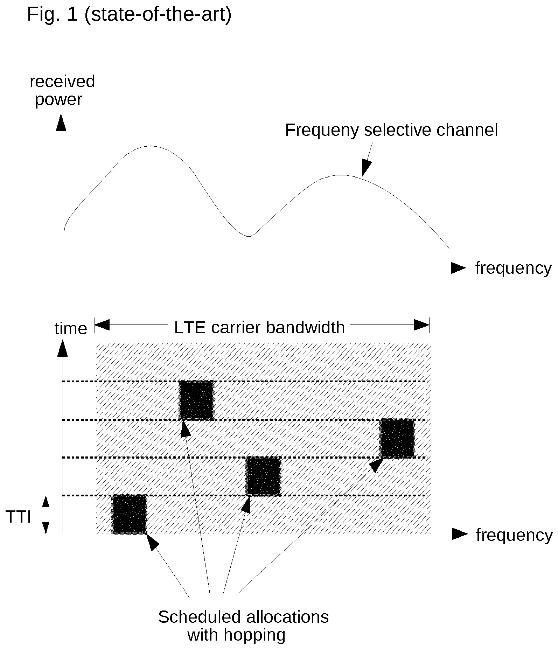

Figure 1 shows scheduled allocations in different LTE resource blocks that can be allocated with hopping. Each LTE resource has time duration of a transmission time interval (TTI) within the LTE carrier bandwidth. Considering LTE, for example, the carrier bandwidth is upper limited to 20MHz.

In order to extend the simultaneously usable bandwidth available to an individual UE and, thus, the throughput it can achieve even further, LTE is introducing the carrier aggregation feature in 3GPP release 10. A UE can be configured by the base station to simultaneously receive and transmit on multiple carriers. In LTE, the intention is to increase throughput available to individual UEs, i.e. configured carriers may be used simultaneously. Even if an LTE UE is configured to multiple carriers, frequency hopping is performed within individual carriers, not across different carriers.

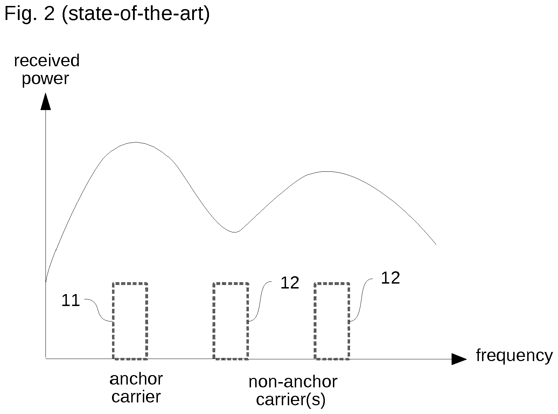

In NB-IoT, a similar scheme has been adopted, called multi-physical resource blocks (multiple-PRB). Multiple NB-IoT carriers are allocated within the frequency spectrum of the LTE mother cell. A subset of these, called anchor carrier, carry synchronization signals and system information broadcast, whereas non-anchor carriers solemnly carry unicast traffic dedicated to individual users. Variation of received power over frequency, which may be time-variant is shown in figure 2.

In contrast to carrier aggregation in LTE, multiple-PRB in NB-IoT is not intended to increase the peak throughput of an individual UE but to increase cell capacity by avoiding the high overhead from synchronization and broadcast information on non-anchor carriers. Individual UEs are not supposed to receive and transmit on multiple-PRBs simultaneously.

In NB-IoT, UEs can be re-assigned to a different carrier (anchor or non-anchor) by means of a radio resource control (RRC) reconfiguration procedure. Such a procedure requires the exchange of configuration information on RRC layer, including acknowledgements towards the base station.

In addition to the amount of time needed for such a procedure, at least acknowledgements require energy for transmissions in uplink direction (UL). Hence, existing NB-IoT procedures for changing carriers are not suitable for fast and frequent switching of channels which would be needed to effectively exploit channel diversity.

In the NB-IoT standard, downlink (DL) and uplink (UL) channels occupy at most 180 kHz in frequency direction. In such channels, frequency diversity is very limited. For example, a delay spread of 1 µs results in a coherence bandwidth of 1MHz.

In principle, frequency diversity can be generated by using multiple NB-IoT carriers. However, the existing NB-IoT procedure for changing carriers is not suitable due to the latency and additional battery power consumption involved.

It is therefore the objective of the invention to provide or introduce a different scheme or procedure for transmission to or from UE that can avoid the problems mentioned above, e.g. no additional power consumption is needed in the UE.

The object of the invention will be solved by a Narrowband-Internet of Things (NB-IoT) scheduling scheme for transmissions to or from user equipment (UE) using multiple NB-IoT carriers allocated in a frequency spectrum of a cell of a network by changing the carriers through frequency hopping according to patterns known to the base station (NB) and UE, whereas the UE is configured with the multiple NB-IoT carriers and the transmissions are scheduled on the configured carriers according to the pattern explicitly signaled by the base station of the network or as pre-defined in both, the base station and the UE to exploit frequency diversity.

A NB-IoT carrier has a fixed bandwidth and is part of the available frequency spectrum. A carrier is used for the transmission of synchronization signals and data signals.

In NB-IoT, scheduling happens on transmissions of single blocks of information. Such a single block of information is an UL transport block mapped to one narrowband uplink shared channel (NPUSCH), a DL transport block mapped to one narrowband downlink shared channel or one downlink control information (DCI) mapped to on narrowband downlink control channel NPDCCH.

The new NB-IoT scheduling scheme supports frequency hopping between NB-IoT carriers and allows an exploitation of frequency diversity without application of an energy-consuming higher layer reconfiguration.

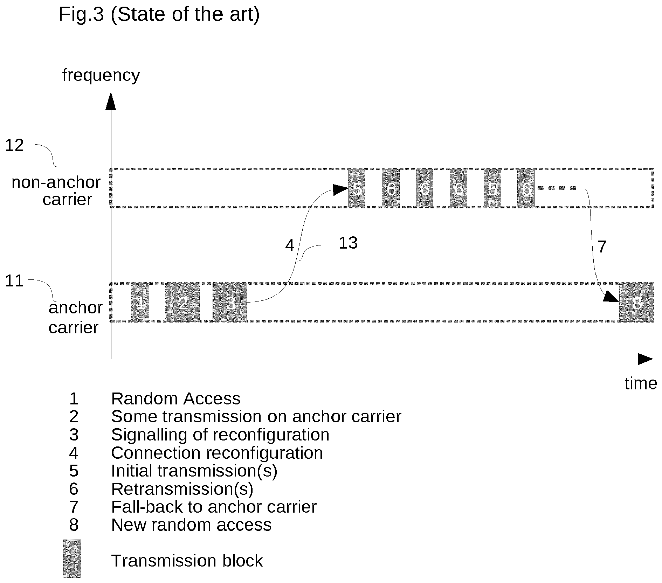

It is known that in the state-of-the-art, which is reflected by 3GPP release 13, a NB-IoT UE needs to go through the following procedure to utilize a non-anchor carrier: Firstly, the UE performs random access on an anchor carrier to establish the radio resource control (RRC) signaling connection. The RRC protocol is used to include connection establishment and release functions, broadcast of system information, radio bearer establishment, reconfiguration and release, RRC connection mobility procedures, paging notification and release and outer loop power control. By means of the signaling functions the RRC configures the user and control planes according to the network status and allows for Radio Resource Management strategies to be implemented. The operation of the RRC is guided by a state machine which defines certain specific states that a UE may be present in. The different states in this state machine have different amounts of radio resources associated with them and these are the resources that the UE may use when it is present in a given specific state. Since different amounts of resources are available at different states the quality of the service that the user experiences and the energy consumption of the UE are influenced by this state machine. Secondly, further transmissions are carried out on the anchor carrier. This is an optional step. Thirdly, the network starts a reconfiguration, including provisioning of information about new carrier to UE. This information about the new carrier will be conveyed by downlink data transfer from the base station or network to the UE. In a fourth step, the UE performs the reconfiguration including the carrier change. And fifthly, the UE sends initial transmissions on this new carrier as well as sixthly, the UE sends re-transmissions on this new carrier. At last, the network reconfigures the UE again or the UE detects conditions for fall back to the anchor carrier. Then the UE performs a new random access on the anchor carrier. This procedure is illustrated in figure 3.

In the new and inventive NB-IoT scheduling scheme the proposed hopping procedure starts from the anchor carrier. For example, the UE is configured with an anchor carrier as well as two non-anchor carriers. Firstly, the UE establishes a signaling connection on the anchor carrier in the same way as in legacy case (see above). It is important that information about non-anchor carrier(s) are already provided from the network to the UE. Based on the signaling from the network, a new transmission starts on an anchor carrier. In contrast to the legacy case, repetitions or retransmissions of the initial transmission are scheduled on configured carriers according to a pattern explicitly signaled or as pre-defined. A pattern is the sequence of carrier indices to be used. The pattern can be explicitly signaled form the base station in the network or it is pre-defined which means that the actual pattern is calculated according to a certain algorithm known to base station and UE.

The advantage of using the new scheme is that carriers can be changed frequently to exploit frequency diversity without time-consuming reconfiguration of NB-IoT higher layers for each carrier change.

In an embodiment of the invention the UE performs random access to an anchor or to a non-anchor carrier to establish a radio resource control connection in a first step. This is necessary to establish the connection and release functions and so on as well as to configure the user and control planes according to the network status.

So, further transmissions can be performed on carriers where the UE has performed random access and the multiple carriers are available for frequency hopping.

In a further embodiment of the invention the network provides information about other available NB IoT non-anchor carriers in a second step to the UE. This configuration information is prerequisite for application of the new frequency hopping scheme. Frequency hopping will be performed later on the configured set of carriers.

In a further embodiment of the invention the network provides information about other available NB-IoT anchor and non-anchor carriers in a second step to the UE for later scheduling. This has the advantage of greater scheduling flexibility and increased frequency range for diversity.

So, according to the inventive scheduling scheme it is advantageous that new initial transmissions are scheduled with frequency hopping.

It can be advantageous if a new initial transmission is scheduled and starts on the anchor carrier. This has the advantage that in cases where channel conditions are good and exploitation of frequency diversity is not needed, the scheduling is equivalent to the behavior of legacy UEs. Thus, scheduling of multiple UEs at base station side is simplified.

In a more generic approach of the inventive scheduling scheme the new initial transmission is scheduled and starts on a non-anchor carrier based on the signaling of the NB-IoT network. This has the effect/advantage of greater scheduling flexibility.

The inventive scheduling scheme with the frequency hopping can be applied to downlink and / or uplink direction. Therefore, it allows an exploitation of frequency diversity without overhead of higher layer reconfiguration in uplink as well as in downlink direction.

In an embodiment of the invention the scheduled carrier is changed from a NB-IoT resource unit to another NB-IoT resource unit within a transmission of a single block of information. So, one can say that the scheduled carrier is changed between the NB-IoT resource units utilized for transmission of a block of information. This has the advantage of exploitation of frequency diversity already within a transmission of a block of information.

In a further embodiment of the invention the scheduled carrier is changed from repetition to repetition within a transmission of the single block of information. This has the advantage of maximizing the frequency diversity already within the initial transmission of a block of information.

It is also advantageous if the scheduled carrier is changed from retransmission to retransmission of a HARQ process, because initial transmission on one carrier has failed already and changing to another carrier yields statistically a higher probability of a successful retransmission. The HARQ process (Hybrid Automatic Repeat Request) works at the physical layer and is controlled by the MAC layer. If the received data has an error then the receiver buffers the data and requests a re-transmission from the sender. When the receiver receives the re-transmitted data, it then combines it with buffered data prior to channel decoding and error detection. This helps to improve the performance of the re-transmissions.

In a further embodiment of the scheduling scheme the frequency hopping starts from anchor carrier and switch to non-anchor carriers. This has the advantage that communication between base station and UE switches from a carrier with high overhead from synchronization and broadcast information to carriers without such overhead and hence providing better throughput or latency for a particular UE.

It is also possible that the frequency hopping starts from a non-anchor carrier and switch to other non-anchor carriers. This has the additional effect that initial transmissions are not limited to a carrier with high overhead anymore but can be sent on carriers without overhead.

In another embodiment it is possible that the frequency hopping starts from any carrier and subsequently switch to any carrier. By this, the procedure is even more flexible.

In a further embodiment of the inventive NB-IoT scheduling scheme the network controls the frequency hopping sequences either in open loop or closed loop fashion.

Open loop means that the base station just applies some frequency hopping without considering feedback from the UE. This approach relies on the positive effect of diversity irrespective of true channel conditions. This allows for very simple and robust implementations.

Closed loop means that true measurements or statistics are considered in scheduling decisions. For example, it may be beneficial to choose the same carrier where the last successful transmission was encountered as starting carrier for the next initial transmission.

For fine-granular control of frequency hopping in uplink (UL) and downlink (DL) data transfers, i.e. on narrowband physical uplink shared channel (NPUSCH) and narrowband physical downlink shared channel (NPDSCH) respectively, it would be beneficial to add information about enabling/disabling of hopping or hopping parameters like starting carrier to the content of narrowband physical downlink control channel (NPDCCH). This allows the base station to enable and disable frequency hopping from transmission to transmission and hence to quickly react on changes of channel conditions or the load of a cell. In another embodiment, frequency hopping may not just be applied to shared channels NPUSCH and NPDSCH but also to the control channel NPDCCH (narrowband physical downlink control channel). This allows for exploitation of frequency diversity on control channel transmissions and hence better performance on control channel, i.e. less errors on or entirely missed control information.

To use the proposed NB-IoT scheduling scheme the frame structure should be changed therein that a guard time for tuning to the new carrier frequency at the UE side is added. This has the advantage that requirements do not change significantly for the radio front end mainly on the UE side, i.e. the timing requirements for changing the radio frequency should not be shortened significantly compared with requirements for legacy devices.

For implementing the proposed and inventive NB-IoT scheduling scheme for transmission to or from user equipment the following extensions to the telecommunication standard of NB-IoT are required: The radio resource control protocol as a layer between the user equipment and the base station of a network needs the additional capability of the UE side that frequency hopping is supported by the UE. Furthermore, it is necessary that a simultaneous configuration of multiple NB-IoT carriers is possible. This can be achieve by implementing a configuration of hopping specific parameters, e.g. for parametrization of pre-defined hopping pattern. Optionally it would be advantageous if the hopping feature can be enabled/disabled for backward compatibility.

For fine-granular scheduling of shared channels NPUSCH and NPDSCH via narrowband physical downlink control channel (NPDCCH) it would be advantageous if information about enabling/disabling of hopping to a scheduling grant or explicit hopping parameters to a scheduling grant will be added.

The invention will be explained in more detail using exemplary embodiments.

The appended drawings show
- Fig. 1: Scheduled allocations in different LTE carriers that can be allocated with hopping (state-of-the-art) ;
- Fig. 2: Multiple NB-IoT carriers (anchor and non-anchor) are allocated within the frequency spectrum of the LTE mother cell (state-of-the-art);
- Fig. 3: Procedure to utilize one non-anchor carrier (state-of-the-art);
- Fig. 4: Illustration of the inventive NB-IoT scheduling scheme starting from the anchor carrier;

- Fig. 5: Illustration of the inventive NB-IoT scheduling scheme starting from any of the configured carrier.

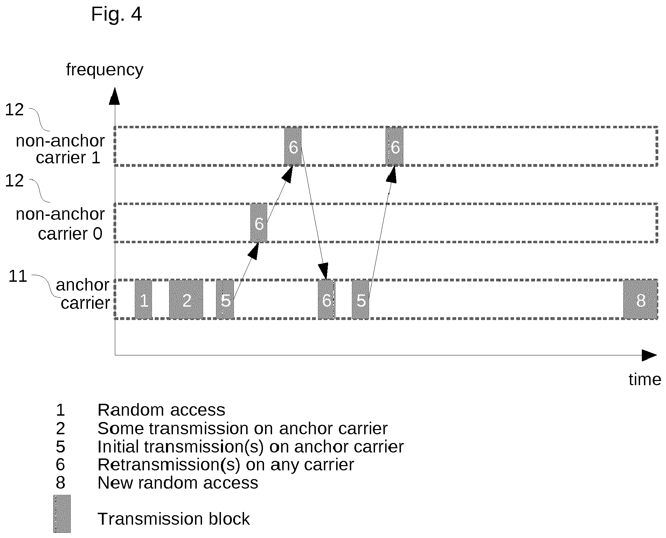

Figure 4 shows an illustration of the proposed hopping procedure starting from the anchor carrier 11. The UE is configured with an anchor carrier 11 as well as two non-anchor carriers 12. First, the UE establishes a signaling connection on the anchor carrier 11 in the same way as in legacy case. However, information about non-anchor carrier(s) 12 shall already be provided. Based on signaling from network, a new transmission starts on anchor carrier 11. In contrast to legacy case, repetitions or retransmissions of the initial transmission are scheduled on configured carriers according to a pattern explicitly signaled or as pre-defined.

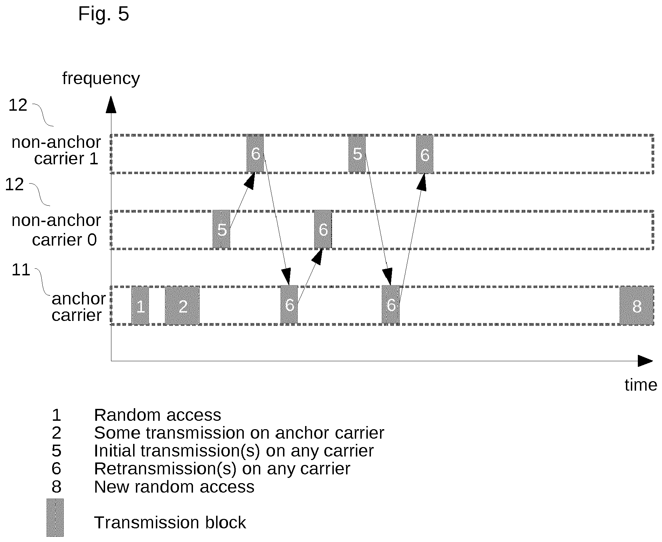

Figure 5 illustrates an even more generic approach, whereas initial transmissions do not necessarily need to be scheduled on anchor carrier 11 but could start on any of the configured carriers 11, 12.

Within the scope of the invention, the following design choices are included: The frequency hopping can be applied to downlink or uplink or both. Furthermore, the carriers 11, 12 can be changed within an NB-IoT resource unit, or from repetition to repetition within a transmission time interval, or from retransmission to retransmission of a HARQ process.

The frequency hopping may start from anchor carrier 11 and switch to non-anchor carriers 12 or it starts from a non-anchor carrier 12 and switch to other non-anchor carriers 12 or it start from any carrier 11, 12 and subsequently switch to any carrier 11, 12. This flexibility has the advantage that the base station can adjust the scheduling scheme to its needs, i.e. according to channel conditions or load within the cell.

In order to perform the proposed scheduling scheme the signaling contains explicit hopping resources (carriers) and the usage of pre-defined hopping patterns. This is necessary that the UEs know the carriers 11, 12 that they can allocate or on which carrier 11, 12 to expect a transmission from base station.

The network controls the hopping sequences either in open loop, or closed loop fashion. In open loop operation, base station schedules transmissions with frequency hopping 13 without considering feedback from UE. In closed loop operation, base station incorporates feedback from the UE in subsequent scheduling decisions.

For implementing the proposed and inventive NB-IoT scheduling scheme for transmission to or from user equipment the following extensions to the telecommunication standard of NB-IoT are required: The radio resource control protocol as a layer between the user equipment and the base station of a network needs the additional capability of the UE side that frequency hopping is supported by the UE. Furthermore, it is necessary that a simultaneous configuration of multiple NB-IoT carriers is possible. This can be achieve by implementing a configuration of hopping specific parameters, e.g. for parametrization of pre-defined hopping pattern. Optionally it would be advantageous if the hopping feature can be enabled/disabled for backward compatibility.

For fine-granular scheduling of shared channels NPUSCH and NPDSCH via narrowband physical downlink control channel (NPDCCH) it would be advantageous if information about enabling/disabling of hopping to a scheduling grant or explicit hopping parameters to a scheduling grant will be added.

Besides application on shared channels, frequency hopping can also be added to NPDCCH.

To use the proposed NB-IoT scheduling scheme the frame structure should be change therein that a guard time for tuning to the new carrier frequency at the UE side is added. This has the advantage that requirements for switching frequencies on UE side are not increased.

**Reference signs**
- 11: Anchor carrier
- 12: Non-anchor carrier
- 13: Frequency hopping

## Claims

1. Narrowband-Internet of Things (NB-IoT) scheduling scheme for transmissions to or from user equipment (UE) using multiple NB-IoT carriers (11, 12) allocated in a frequency spectrum of a cell of a network by changing the carriers (11, 12) through frequency hopping (13) according to patterns known to the base station (NB) and UE, whereas the UE is configured with the multiple NB-IoT carriers (11, 12) and the transmissions are scheduled on the configured carriers (11, 12) according to the pattern explicitly signaled by the base station of a network or as pre-defined in both, the base station and the UE to exploit frequency diversity.

2. NB-IoT scheduling scheme according to claim 1, wherein in a first step the UE performs random access to an anchor (11) or to a non-anchor (12) carrier to establish a radio resource control connection.

3. NB-IoT scheduling scheme according to one of the claims 1 or 2, wherein in a second step the network provides information about other available NB-IoT non-anchor carriers (12) to the UE or the network provides information about other available NB-IoT anchor (11) and non-anchor (12) carriers to the UE for later scheduling.

4. NB-IoT scheduling scheme according to one of the former claims, wherein a new initial transmission is scheduled and starts on the anchor carrier (11).

5. NB-IoT scheduling scheme according to claim 5, wherein the new initial transmission is scheduled and starts on a non-anchor carrier (12) based on the signaling of the NB-IoT network.

6. NB-IoT scheduling scheme according to one of the former claims, wherein frequency hopping (13) is applied to downlink and / or uplink direction.

7. NB-IoT scheduling scheme according to one of the former claims, wherein the scheduled carrier (11, 12) is changed from a NB-IoT resource unit to another NB-IoT resource unit within a transmission of a single block of information.

8. NB-IoT scheduling scheme according to one of the former claims, wherein the scheduled carrier (11, 12) is changed from repetition to repetition within the transmission of the single block of information.

9. NB-IoT scheduling scheme according to one of the former claims, wherein the scheduled carrier (11, 12) is changed from retransmission to retransmission of a HARQ process.

10. NB-IoT scheduling scheme according to one of the former claims, wherein the frequency hopping (13) starts from anchor carrier (11) and switch to non-anchor carriers (12) .

11. NB-IoT scheduling scheme according to one of the former claims, wherein the frequency hopping (13) starts from a non-anchor carrier (12) and switch to other non-anchor carriers (12).

12. NB-IoT scheduling scheme according to one of the former claims, wherein the frequency hopping (13) starts from any carrier (11, 12) and subsequently switch to any carrier (11, 12).

13. NB-IoT scheduling scheme according to one of the former claims, wherein the network controls the frequency hopping sequences (13) either in open loop or closed loop fashion.

14. NB-IoT scheduling scheme according to one of the former claims, wherein frequency hopping (13) is applied to shared channel NPUSCH and NPDSCH and / or control channel NPDCCH.
